# FASCICULE DE BREVET EUROPEEN

(11) **EP 0 796 387 B1**
(45) Date de publication et mention de la délivrance du brevet: **07.01.1999**
(21) Numéro de dépôt: 95942750.1
(22) Date de dépôt: 15.12.1995
(51) Int. Cl.: E21D 9/08, C09K 7/08

(54) **PRODUIT ET PROCEDE POUR LA LUBRIFICATION DES SURFACES METALLIQUES D'UN TUNNELIER A PRESSION DE TERRE**
PRODUKT UND VERFAHREN ZUM SCHMIEREN VON METALLISCHEN OBERFLÄCHEN IN EINER TUNNELVORTRIEBSMASCHINE
MATERIAL AND METHOD FOR LUBRICATING THE METAL SURFACES OF AN EARTH-PRESSURE TUNNEL BORING MACHINE

(30) Priorité: 16.12.1994 FR 9415296
(43) Date de publication de la demande: 24.09.1997
(73) Titulaire: Condat S.A., 38670 Chasse-sur-Rhone (FR)
(72) Inventeur: BASSET, Jean-Marc, F-69110 Sainte-Foy-lès-Lyon (FR); HOFMANN, Paul, F-38850 Auberives/Varèze (FR); MANSOUX, Jean-Louis, F-69100 Villeurbanne (FR); ROMAN, Philippe, F-38670 Chasse-sur-Rhône (FR)
(74) Mandataire: Richebourg, Michel François
(86) Numéro de dépôt international: FR9501675
(87) Numéro de publication internationale: WO9618802

(56) Documents cités:
- EP-A- 0 470 253
- WO-A-93/22538
- GB-A- 2 099 884
- GB-A- 2 263 490
- PATENT ABSTRACTS OF JAPAN vol. 9, no. 172 (M-397) [1895] , 17 Juillet 1985 & JP,A,60 044423 (A.KENSETSU), 9 Mars 1985,
- PATENT ABSTRACTS OF JAPAN vol. 14, no. 34 (C-679) [3977] , 23 Janvier 1990 & JP,A,01 270911 (OHBAYASHI), 30 Octobre 1989,
- PATENT ABSTRACTS OF JAPAN vol. 13, no. 573 (M-909), 19 Décembre 1989 & JP,A,01 239293 (FUJITA), 25 Septembre 1989,

## Description

La présente invention concerne le secteur technique des machines utilisées pour forer des tunnels, couramment dénommées « tunneliers ».

Comme on le sait, ces machines sont aptes à forer dans les formations souterraines un tunnel dont le diamètre correspond directement au diamètre final de l'ouvrage à réaliser, ou sensiblement. Il s'agit naturellement de machines extrêmement puissantes et complexes, dont les exigences et les contraintes d'exploitation sont à la mesure des performances.

Parmi ces contraintes, on considérera ici tout particulièrement les problèmes associés à l'attaque de la formation souterraine par les outils de coupe. Il se produit naturellement une usure importante de ces outils, qui est naturellement en relation avec la dureté de la roche. Un autre problème associé réside dans l'évacuation des produits de coupe et déblais.

Il se produit également une usure importante au niveau des éléments servant à l'évacuation des déblais, notamment lorsqu'il s'agit d'une vis sans fin ou vis d'Archimède, soit au niveau de la vis, soit au niveau de son enveloppe métallique, et encore souvent au niveau de la jupe du tunnelier.

On rappellera qu'il existe deux types principaux de tunneliers : les tunneliers « au rocher » destinés à attaquer des terrains à bonne tenue comme des roches et analogues, et les tunneliers « à confinement » destinés à opérer dans des terrains de tenue médiocre (terrain alluvionnaire, sable, argiles) ou aquifères.

De par la nature des terrains traversés, ces derniers tunneliers sont moins sévèrement confrontés aux problèmes d'usure. Par contre, ils peuvent opérer en milieu meuble ou liquide (aquifère) et ils comportent un système qui assure l'étanchéité du tunnel en arrière de la tête du tunnelier.

On rappellera également l'acuité des problèmes d'usure. Les tunneliers sont en effet des machines dont les pièces d'usure sont par définition très difficiles d'accès, qu'il s'agisse de la vis, des outils et molettes de coupe, de la face avant du tunnelier, ou de sa jupe latérale. Par ailleurs, lorsqu'un phénomène d'usure oblige l'exploitant à remplacer une pièce, il faut stopper la machine, et quelquefois la déplacer et la démonter en partie. Ces immobilisations se traduisent par des pertes financières énormes et tout gain en matière de prolongation de la durée de vie d'une pièce est immédiatement et très fortement ressenti.

L'art antérieur consiste à injecter de l'eau, ou un fluide aqueux, dans la tête du tunnelier. Par des dispositifs appropriés connus, ce fluide est amené aux outils de coupe et, à ce niveau, est mis en contact avec la formation à forer.

Ce fluide remplit donc une double fonction très classique, qui est de lubrifier la zone de contact entre l'outil de coupe et la roche, d'une part, et d'autre part de permettre une évacuation plus facile des produits de coupe, sous la forme d'une boue chargée de débris, et de réduire la formation de poussières.

Cependant, il ne s'agit que d'un palliatif et l'industrie considérée est confrontée depuis de nombreuses années à des problèmes de plus en plus aigus, liés aux performances des machines et aux exigences des utilisateurs.

On a également utilisé des mousses constituées seulement d'eau et de tensio-actif(s) (et d'un gaz comme l'air) dans le cas des tunneliers à confinement. Le but de la mousse à l'eau est alors de fluidifier les déblais, d'améliorer la perméabilité du terrain (ce qui est possible en raison précisément de la nature du terrain rencontré par ces types de tunneliers) et donc de réduire le couple appliqué à la machine.

Cette technique a été essayée sur les tunneliers au rocher et est inopérante, c'est-à-dire n'apporte pas de progrès substantiel.

L'emploi de systèmes lubrifiants a également été essayé, également sans résultat notable.

Selon l'invention, les problèmes évoqués ci-dessus sont très remarquablement améliorés.

Le document WO-A-93/22538, qui est considéré comme l'état de la technique le plus proche, décrit (cf. revendications 1, 8, 13; page 6, ligne 9 et page 5, ligne 13) un procédé et une mousse, desquels l'objet des revendications indépendantes 1, 6 ne diffère qu'en ce que le fluide comprend au moins un argile.

Cette caractéristique remédie à l'usure de l'appareillage du tunnelier le remplacement duquel est très difficile et onéreux.

Cette caractéristique est employée dans EP-A-470253, colonne 2, lignes 54-56 pour un autre but, notamment pour améliorer la fluidité et la viscosité des déblais.

Selon l'invention, on injecte dans la tête du tunnelier, non pas un fluide aqueux, ou une mousse à l'eau ou un lubrifiant, mais une composition aqueuse en mousse fortement chargée en argile(s).

Cette composition est injectée sous forme d'une mousse, formée soit en amont de la tête du tunnelier, soit « in-situ ».

Il en résulte une réduction tout à fait inattendue de l'usure, ainsi qu'une extraction beaucoup plus facile des produits de coupe.

La composition moussée d'argile permet aussi de réduire fortement le volume d'eau nécessaire, ce qui porte sur des volumes énormes et a donc un grand impact sur le respect de l'environnement, et de plus le traitement des déblais en vue de respecter l'environnement est plus facile, certains déblais pouvant même ne pas être traités.

Sans vouloir être limité par une théorie quelconque, il a été remarqué que la réduction de l'usure semble provenir essentiellement d'un phénomène d'enrobage des fragments de roche par une couche de composition selon l'invention.

Ainsi, l'usure est réduite non pas seulement par une lubrification ou fluidification du milieu ambiant, mais essentiellement par une fonction nouvelle qui réduit le caractère abrasif de la roche elle-même, ce qui apporte une solution radicale aux problèmes d'usure.

D'autres caractéristiques et avantages de l'invention seront mieux compris à la lecture de la description qui va suivre et en se référant au dessin annexé sur lequel :
- la Fig. 1 représente schématiquement et en coupe transversale un tunnelier en opération ;

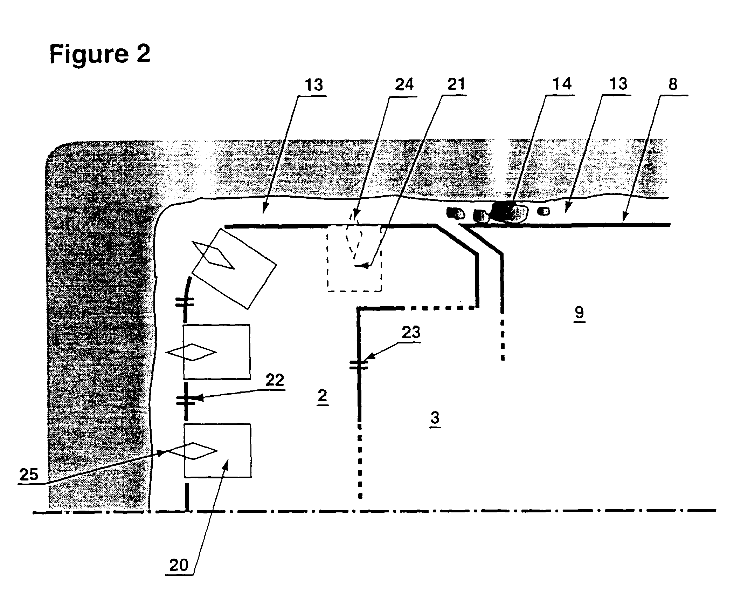

- la Fig. 2 représente certains détails du tunnelier selon la Figure 1 ;
- la Figure 3 représente schématiquement le système à « tubes » de béton et vérins utilisé pour simultanément faire progresser le tunnelier et étayer la paroi du tunnel derrière la machine ;
- la Figure 4 représente la cellule d'essai mise au point pour évaluer l'efficacité de l'invention par rapport à l'art antérieur.

Sur ce dessin, les mêmes références ont les mêmes significations, qui sont les suivantes :
- 1.: formation souterraine.
- 2.: tête rotative du tunnelier.
- 3.: chambre du tunnelier.
- 4,5.: système d'extraction des déblais : 5 vis sans fin ; 4 tunnel (ou « casing ») de la vis.
- 6.: déblais.
- 7.: face avant de la tête du tunnelier.
- 8.: jupe du tunnelier.
- 9.: corps (fixe) du tunnelier.
- 10.: circulation générale des déblais.
- 11.: espace de coupe.
- 12.: espace de surcoupe.
- 13.: intervalle jupe/paroi.
- 14.: fragment de déblai.
- 15.: face arrière de la tête.
- 20.: molette de coupe et son support.
- 21.: molette de surcoupe et son support.
- 22.: point d'injection en face avant.
- 23.: point d'injection en face arrière.
- 24.: molette de surcoupe
- 25.: molette de coupe
- 30.: « tube » (de béton).
- 31.: contact paroi de la formation / « tube ».
- 32.: vérin de poussée.
- 40.: récipient.
- 41.: plaque d'usure.
- 42.: produit d'essai.
- 43.: arbre.

Comme on le rappellera ici brièvement, un tunnelier destiné à forer un tunnel dans une formation (1) se compose essentiellement d'un corps cylindrique (9) comportant la machinerie appropriée, et d'une tête (2) montée pivotante sur l'avant du corps. Cette tête porte les outils de coupe qui consistent en molettes de coupe (25) et supports (20) et éventuellement molettes de « surcoupe » (24) et supports (21).

Les outils de coupe (et éventuellement de surcoupe) attaquent la formation (1) par leur rotation propre associée à la rotation de la tête (2). De manière classique on injecte un fluide généralement aqueux dans l'espace de coupe (11) et dans la chambre interne (3) ainsi éventuellement que dans l'espace de surcoupe (12) pour limiter l'usure des pièces et favoriser l'extraction des déblais vers l'arrière du tunnelier.

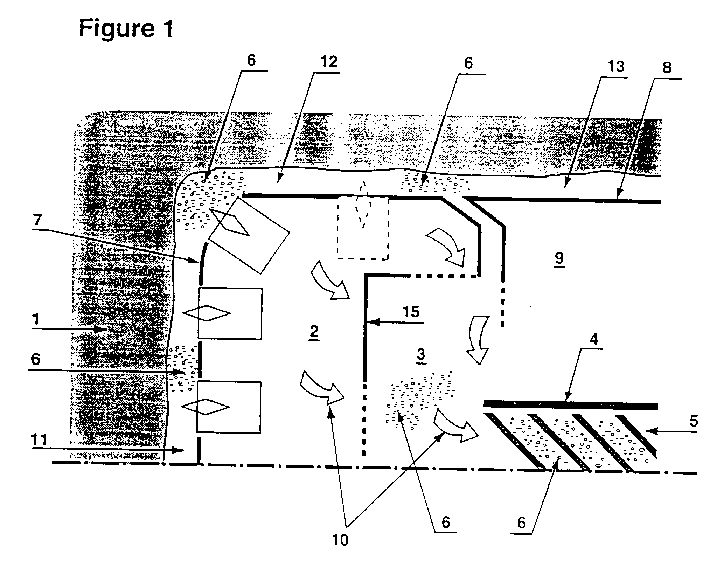

Cette extraction est classiquement effectuée par des systèmes internes au corps du tunnelier, généralement un ruban ou une vis sans fin. A titre non limitatif, on a représenté sur la Figure 1 une vis sans fin (5) et son tunnel ou enveloppe (4).

Toujours de manière classique, les déblais mélangés au fluide aqueux traversent la tête (2) par des conduits non représentés, et se rassemblent dans la chambre interne (3) d'où ils sont extraits (6) vers l'arrière (4, 5). Naturellement, une partie de ces déblais va circuler plus ou moins aisément autour de la tête (espace 12) et encore moins aisément autour de la jupe fixe (8) du tunnelier, dans l'intervalle (13).

L'homme de métier sait que les problèmes d'usure et de blocage ou coincement sont les suivants :
- usure des outils de coupe situés sur la face avant (7)
- usure des outils de surcoupe (24)
- usure de la jupe (8) et même éventuellement phénomènes de coincement par des blocs (14) qui ont pu ne pas être suffisamment désagrégés
- usure des faces avant et latérale
- usure et éventuellement blocage ou coincement au niveau du système d'extraction, notamment lorsque celui-ci consiste en une vis et son enveloppe (4, 5).

Dans l'état de la technique, on a utilisé des boues lourdes constituées d'eau, d'argile et/ou de polymères. Ces produits donnent des résultats convenables mais il apparaît très souhaitable de les améliorer, afin d'espacer les interventions de maintenance dans le temps, ce qui serait un avantage considérable.

Par ailleurs, l'emploi de boues lourdes de l'art antérieur nécessite des stations de préparation extrêmement encombrantes (ce qui devient rhédibitoire en milieu urbanisé par exemple) et coûteuses. La boue requiert d'énormes quantités d'eau, ce qui crée un problème d'ordre écologique, et est un produit liquide, ce qui pose un grave problème de respect de l'environnement au niveau des déchages. Enfin, ces boues chargées de déblais sont difficiles à enlever des systèmes d'extraction, par exemple un tapis roulant, avec une difficulté aggravée par toute pente.

L'invention a pour but de proposer une technique qui réduit fortement l'usure des pièces, et donc augmente fortement l'intervalle de maintenance, et permet de s'affrachir des contraintes de mise en oeuvre des boues lourdes.

Selon l'invention, on utilise toute argile capable de former, dans les conditions décrites ici, un enrobage des débris et des pièces menacées, et d'y adhérer sans phénomène de « lavage » néfaste.

De très nombreuses argiles existent et l'homme de métier pourra utiliser les plus intéressantes par la mise en oeuvre d'essais simples comme celui qui sera décrit ci-dessous, le tout sans difficulté. De préférence, on choisira une argile dont la source sera aussi proche que possible du chantier, pour des raisons évidentes de coût de transport.

La mousse sera formée à l'aide d'un agent moussant connu ou de leurs mélanges.

On choisira de préférence, pour la commodité des opérations de mélange, un surfactant ou agent moussant liquide (ou un mélange liquide).

Une composition représentative de l'invention est constituée de 34 l de fluide aqueux précurseur de mousse pour 66 l d'argile.

Pour un même volume pompé de 100 l, l'art antérieur classique utilise 90 l d'eau pour 10 l de bentonite.

### EXEMPLE D'UTILISATION

### Procédure d'essai

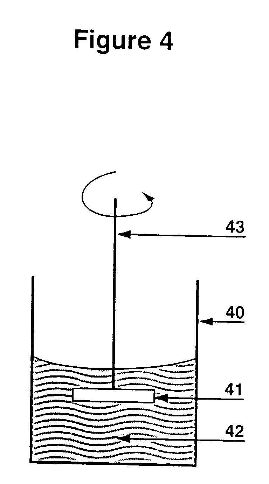

La cellule d'essai est représentée sur la Figure 4. Cette cellule simple permettra à l'homme de métier de sélectionner rapidement, par des essais de routine en laboratoire, le ou les argile(s) et le ou les surfactants (et additifs classiques) à utiliser, ainsi que les proportions de gaz comme l'air comprimé, pour adapter la présente description à chaque cas particulier ; on comprendra qu'il est impossible de présenter ici un exemple pour les innombrables combinaisons de formation à creuser et de type de tunnelier, d'outils de coupe et d'emplacement des outils de coupe. Par contre, l'enseignement de l'invention sera applicable, généralement, grâce au présent exemple, avec seulement des adaptations à la portée de l'homme de métier, pour réaliser une mousse apte à rester suffisamment stable et apte au transport des déblais.

La cellule comporte un récipient 40 dans laquelle on fait tourner une plaque d'usure en acier (41) immergée dans le produit à tester (42).

Cette procédure d'essai, par exemple à 100 tr/min dans un récipient de 10 l, est particulièrement représentative de l'usure de la vis d'extraction qui est le problème le plus sérieux.

On a formé en tête du tunnelier une mousse d'argile formée de :
- argile 66 l
- mélange aqueux moussant (eau et additifs) 34 l

Parmi les additifs, l'agent moussant est un mélange de tensio-actifs appropriés, disponibles dans le commerce donnant une mousse stable et de bonne qualité, présentant de bonnes propriétés suspensoïdes.

Le test mis en place (tel que décrit ci-dessus en relation avec la Figure 4) consistait à comparer l'usure sur les surfaces métalliques engendrée par du gneiss. Les résultats sont les suivants :
* sur gneiss sans additif : Niveau d'usure : 100
* sur gneiss + eau : Niveau d'usure : 20
* sur gneiss + eau + bentonite + argile : Niveau d'usure : 29
* sur gneiss + mélange mousse d'argile ci-dessus : Niveau d'usure : 1 à 2

Ces tests ont été confirmés sur un échantillon de mousse d'argile après passage à travers la tête de coupe d'un tunnelier.

La mousse est injectée dans le tunnelier de manière classique, par des joints tournants connus, ce qui ne nécessite donc pas de modification de la machine.

On pourra injecter la mousse selon l'invention par la face avant seulement, mais on pratiquera de préférence la double injection en face avant et en face arrière pour faciliter l'extraction.

L'essai révèle un niveau d'usure extraordinairement faible qui est en fait d'un ordre de grandeur différent.

Sans vouloir être limitée par une quelconque théorie, la demanderesse favorise l'hypothèse d'un enrobage des particules abrasives, des outils de coupe et des surfaces de la machine et de la formation, par la mousse, avec constitution d'interfaces de bonne adhérence (qui ne se détruisent pas, ou se reforment) et de nature à réduire de manière surprenante les coefficients de friction en cause.

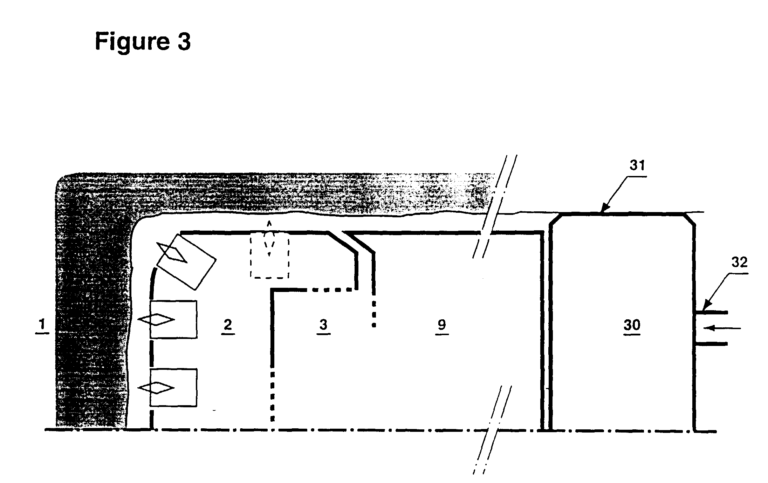

L'invention présente également un grand intérêt dans la mise en oeuvre des « pousse-tube ». Ces systèmes, schématisés sur la Figure 3, sont des tubes ou anneaux de béton ou matière analogue (30), accolés à l'arière du tunnelier (9), poussés vers l'avant par des vérins (32). Leur fonction est double : transmettre la poussée et le déplacement au tunnelier, et consolider ou étayer le tunnel. Leur surface périphérique est donc sensiblement au contact de la paroi du tunnel (31).

On a constaté que, pour les raisons indiquées plus haut, le glissement était grandement favorisé par l'injection de la mousse d'argile, selon l'invention.

## Revendications

1. Procédé pour le percement de tunnels, au moyen de machines dites « tunneliers », selon lequel un fluide est envoyé dans la tête du tunnelier pour être mélangé avec la formation à forer, au niveau des outils de coupe, et éventuellement de la chambre interne du tunnelier, puis est extrait avec les débris de coupe, on injecte dans la tête du tunnelier une mousse aqueuse d'argile(s) composée essentiellement d'eau, d'au moins une argile, d'au moins un surfactant, et d'au moins un gaz tel que l'air, en proportions donnant une mousse stable et de bonne qualité.

2. Procédé selon la revendication 1, **caractérisé** en ce que l'on injecte une mousse déjà formée en arrière du tunnelier.

3. Procédé selon la revendication 1, **caractérisé** en ce que l'on envoie en tête du tunnelier une base aqueuse pour mousse, composée d'eau ou d'un fluide aqueux et d'au moins une argile et d'au moins un surfactant, et on forme la mousse « in situ » par moussage à l'aide d'un gaz tel que l'air comprimé ou l'azote.

4. Procédé selon l'une quelconque des revendications 1 à 3 **caractérisé** en ce que la mousse d'argile est injectée par des joints tournants.

5. Procédé selon l'une quelconque des revendications 1 à 4, **caractérisé** en ce que la composition moussée comprend environ 34 l d'eau ou de fluide aqueux, tel que eau, surfactant(s), additif(s) classique(s), pour 66 l d'argile(s).

6. Procédé selon l'une quelconque des revendications 1 à 5, **caractérisé** en ce que l'on injecte ou fait parvenir la mousse au niveau des surfaces latérales (31) des tubes de poussée (30), qui sont des tubes ou anneaux en béton ou matière analogue accolés à l'arrière du tunnelier (9), poussés vers l'avant par des vérins (32), et dont la fonction est de transmettre la poussée et le déplacement au tunnelier, et de consolider ou étayer le tunnel.

7. Mousses d'argiles pour alimentation de la tête d'un tunnelier, **caractérisées** en ce qu'elles consistent en les compositions telles que décrites dans l'une quelconque des revendications 1 à 5.

## Patentansprüche

1. Verfahren zum Bohren von Tunnels mit Hilfe von sogenannten Tunnelvortriebsmaschinen, bei welchem ein Fluid in den Kopf der Tunnelvortriebsmaschine eingeleitet wird, um bei den Schneidwerkzeugen und ggf. in der inneren Kammer der Tunnelvortriebsmaschine mit der zu bohrenden Formation gemischt zu werden, und dann mit dem Schnittschutt abgeführt wird, wobei man in den Kopf der Tunnelvortriebsmaschine einen wäßrigen Schaum aus Ton(en) einleitet, der im wesentlichen aus Wasser, mindestens einem Ton, mindestens einem Tensid und mindestens einem Gas wie Luft besteht, und zwar in Anteilen, die einen stabilen Schaum guter Qualität ergeben.

2. Verfahren nach Anspruch 1,
**dadurch gekennzeichnet, daß** man einen bereits hinter der Tunnelvortriebsmaschine gebildeten Schaum einleitet.

3. Verfahren nach Anspruch 1,
**dadurch gekennzeichnet, daß** man am Kopf der Tunnelvortriebsmaschine eine wäßrige Grundlage für Schaum einleitet, die aus Wasser oder einem wäßrigen Fluid und mindestens einem Ton und mindestens einem Tensid besteht, und man den Schaum vor Ort durch Aufschäumung mit Hilfe eines Gases wie Druckluft oder Stickstoffbildet.

4. Verfahren nach einem der Ansprüche 1 bis 3,
**dadurch gekennzeichnet, daß** der Tonschaum über Rohrgelenke eingeleitet wird.

5. Verfahren nach einem der Ansprüche 1 bis 4,
**dadurch gekennzeichnet, daß** die Schaumzusammensetzung ungefähr 34 l Wasser oder wäßriges Fluid wie Wasser, Tensid(e) und gebräuchlichen Zusatz/Zusätze auf 66 l Ton(e) umfaßt.

6. Verfahren nach einem de Ansprüche 1 bis 5,
**dadurch gekennzeichnet, daß** man den Schaum an den Seitenflächen (31) der Schubrohre (30) einleitet oder zutreten läßt, die aus Rohren oder Ringen aus Beton oder ähnlichem Material bestehen, die hinter der Tunnelvortriebsmaschine (9) angesetzt sind und durch Arbeitszylinder (32) nach vorne gedrückt werden und die Aufgabe haben, den Schub und die Bewegung auf die Tunnelvortriebsmaschine zu übertragen und den Tunnel zu befestigen oder abzustützen.

7. Schäume aus Tonen zur Versorgung des Kopfs einer Tunnelvortriebsmaschine,
**dadurch gekennzeichnet, daß** sie aus den Zusammensetzungen bestehen, wie sie in einem der Ansprüche 1 bis 5 beschrieben werden.

## Claims

1. Method for boring tunnels by means of machines called tunnel boring machines, according to which a fluid is conducted into the head of the tunnel boring machine to be mixed with the formation to be bored, at the level of the cutting tools, and, where applicable, of the internal chamber of the tunnel boring machine, is subsequently extracted with the cutting debris, one injects into the tunnel boring machine head an aqueous foam of clay(s) comprised essentially of water, at least one clay, at least one surfactant, and at least one gas such as air, in proportions yielding a stable foam of good quality.

2. Method according to claim 1, characterized in that one injects a foam already formed into the rear of the tunnel boring machine.

3. Method according to claim 1, characterized in that one injects into the head of the tunnel boring machine an aqueous base for foam, comprised of water or an aqueous fluid and at least one clay and at least one surfactant, and the foam is formed « in situ » by foaming by means of a gas such as compressed air or nitrogen.

4. Method according to any of the claims 1 to 3, characterized in that the clay foam is injected by turning joints.

5. Method according to any of the claims 1 to 4, characterized in that the foam composition comprises approximately 34 liters of water or of aqueous fluid, such as water, surfactant(s), conventional additive(s), for 66 liters of clay(s).

6. Method according to any of the claims 1 to 5, characterized in that the foam is injected or brought to the level of the lateral surfaces (31) of the thrust tubes (30), which are tubes or rings in concrete or analogeous material joined or coupled together with the rear of the tunnel boring machine (9), brought or thrust forward by jacks (32), and which function is to transmit the thrust or force and displacement or shift to the tunnel boring machine, and to consolidate or support the tunnel.

7. Clay foams for supplying the head of a tunnel boring machine characterized in that they comprise compositions as described in any of the claims 1 to 5.
